# EUROPEAN PATENT APPLICATION

(11) **EP 4 761 316 A1**
(43) Date of publication of application: **17.06.2026**
(21) Application number: 25199637.7
(22) Date of filing: 02.09.2025
(51) Int. Cl.: H04W 16/14, H01Q 3/00

(54) **DYNAMIC FREQUENCY SELECTION (DFS) ANTENNAS FOR ACCESS POINTS AND METHODS FOR OPERATING DFS ANTENNAS**

(30) Priority: 11.12.2024 US 202463730692 P
(71) Applicant: Ruckus IP Holdings LLC, Claremont, NC 28610 (US)
(72) Inventor: NOGHANIAN, Sima, San Jose, 95126 (US); TANKOV, Ivaylo, Brentwood, 37027 (US); WANG, Genyuan, Santa Clara, 95050 (US)
(74) Representative: Openshaw & Co.

(57) **Abstract**

A method of operating an access point using Dynamic Frequency Selection (DFS) includes selecting an operating mode of a reconfigurable antenna that is configured to operate in both a low cross-polarization mode and in a depolarization (high cross-polarization) mode, listening, when the antenna is operating in the depolarization mode, for transmissions/receiving from other entities on a DFS communication channel, and transmitting on the DFS communication channel if it is determined that the DFS communication channel is free of high priority users. Related access points are also discussed.

## Description

### BACKGROUND

The present invention generally relates to radio communications and, more particularly, to access points suitable for use in wireless local area networks and antennas for such access points.

A wireless local area network ("WLAN") refers to a network that operates in a limited area (e.g., within a home, school, store, campus, shopping mall, etc.) that interconnects two or more electronic devices using wireless radio frequency ("RF") communications. Electronic devices belonging to users ("clients") of a WLAN, such as smartphones, computers, tablets, printers, appliances, televisions, lab equipment and the like ("client devices"), can communicate with each other and with external networks such as the Internet over the WLAN. Since wireless communications are used, portable client devices can be moved throughout the area covered by the WLAN and remain connected to the network. Most WLANs operate under a family of standards promulgated by the Institute of Electrical and Electronics Engineers (IEEE) that are referred to as the IEEE 802.11 standards. WLANs operating under the IEEE 802.11 family of standards are commonly referred to as Wi-Fi networks. Client devices that include a networking subsystem that includes a Wi-Fi network interface can communicate over Wi-Fi networks.

A Wi-Fi network includes one or more access points (also referred to as hotspots) that are typically installed at fixed locations throughout the area covered by the Wi-Fi network. The Wi-Fi network can include a single access point that provides coverage in a very limited area or may include tens, hundreds or even thousands of access points that provide in-building and/or outdoor coverage to a large campus or region. Client devices communicate with each other and/or with wired devices that are connected to the Wi-Fi network through the access points. The access points may be connected to each other and/or to one or more controllers through wired and/or wireless connections. The Wi-Fi network typically includes one or more gateways that may be used to provide Internet access to the client devices.

Early Wi-Fi standards supported communication in the 2.4 GHz frequency band. Later Wi-Fi standards supported communication in the 5150-5850 MHz frequency range (herein "the 5 GHz frequency band"). Most modern access points support communications in both the 2.4 GHz and 5 GHz frequency bands, and have a radio for each frequency band. The United States Federal Communications Commission, however, has imposed a mandate that Wi-Fi communication in the 5.25-5.35 GHz and/or 5.47-5.725 GHz bands do not interfere with weather and civil aviation communications in these frequency ranges. Similarly, EU and some other countries follow the ETSI standard in which the Wi-Fi communication in 5.25-5.35 GHz, 5.47-5.725 GHz, 5.735-5.835, and/or 5.725-5.850 GHz bands should not interfere with weather and civil radar operation.

### SUMMARY

Pursuant to embodiments of the present invention, access points that include antennas are provided. In some embodiments, a method of operating an access point using Dynamic Frequency Selection (DFS) includes selecting an operating mode of an antenna that is configured to operate in both a single polarization mode and in a depolarization mode, listening, when the antenna is operating in the depolarization mode, for transmissions from other entities on a DFS communication channel, and transmitting on the DFS communication channel if it is determined that the DFS communication channel is free of high priority users.

In some embodiments, listening for transmissions occurs on a plurality of DFS communication channels including the DFS communication channel. The method may further include selecting the DFS communication channel of the plurality of DFS communication channels that is free of the transmissions from other entities, responsive to the listening.

In some embodiments, the listening for transmissions from other entities may include listening for transmissions at a first polarization of the antenna in the depolarization mode and at a second polarization of the antenna in the depolarization mode. The first polarization is one of a vertical polarization, a horizontal polarization, a slanted polarization, or a depolarization. The second polarization may be different from the first polarization. The first polarization may include the vertical polarization and the second polarization includes the horizontal polarization that is orthogonal to the vertical polarization. The access point may include a single transceiver and the antenna includes a single antenna configured to operate in two polarizations.

In some embodiments, the configuring the antenna to operate in the depolarization mode includes switching the antenna of the access point to the depolarization mode. The antenna may be switchable between a low cross-polarization in the single polarization mode and a high cross-polarization in the depolarization mode. The method may further include switching, by a controller, a connection of the antenna to a DFS circuit or to a Wi-Fi circuit. When the controller switches the connection of the antenna to the Wi-Fi circuit, the antenna operates at a first polarization in the single polarization mode. The Wi-Fi circuit may be connected to an additional antenna that is configured to operate at a second polarization that is orthogonal to the first polarization. The antenna may include a slot with a plurality of switching elements adjacent to the slot. The configuring the antenna to operate in the single polarization mode may include turning on the plurality of switching elements such that the antenna has a low cross-polarization. The configuring of the antenna to operate in the depolarization mode may include turning off the plurality of switching elements such that the antenna has a high cross-polarization. The plurality of switching elements may include a plurality of diodes. The plurality of diodes may be configured to provide a current path across the slot when the plurality of diodes is turned on.

In some embodiments, an access point is configured to use Dynamic Frequency Selection (DFS) on a communication medium. The access point includes an antenna configured to operate in both a single polarization mode and in a depolarization mode, a controller configured to select an operating mode of the antenna, wherein the operating mode includes the single polarization mode or the depolarization mode, a transceiver configured to listen, when the antenna is operating in the depolarization mode, for transmissions from other entities on a DFS communication channel. The transceiver is configured to transmit using the DFS communication channel if it is determined that the DFS communication channel is free of high priority users.

In some embodiments, the transceiver is configured to listen for transmissions on a plurality of DFS communication channels including the DFS communication channel. The access point further includes a DFS circuit that is configured to select the DFS communication channel of the plurality of DFS communication channels that is free of the transmissions from other entities. The transceiver is configured to transmit using the DFS communication channel that was selected.

In some embodiments, the transceiver is configured to listen for transmissions at a first polarization of the antenna in the depolarization mode and at a second polarization of the antenna in the depolarization mode. The first polarization is one of a vertical polarization, a horizontal polarization, a slanted polarization, or a depolarization, and the second polarization is different from the first polarization. The first polarization may include the vertical polarization and the second polarization includes the horizontal polarization that is orthogonal to the vertical polarization. The access point may include a single transceiver and a single antenna that is configured to operate in two polarizations.

In some embodiments, the controller is configured to switch the antenna to the depolarization mode. The antenna may be switchable between a low cross-polarization in the single polarization mode and a high cross-polarization in the depolarization mode. The controller is configured to switch a connection of the antenna to a DFS circuit or to a Wi-Fi circuit. When the controller switches the connection of the antenna to the Wi-Fi circuit, the antenna operates at a first polarization in the single polarization mode. The Wi-Fi circuit is connected to an additional antenna that is configured to operate at a second polarization that is orthogonal to the first polarization. The antenna includes a slot with a plurality of switching elements adjacent to the slot. When the plurality of switching elements are turned on, the antenna operates at a low cross-polarization. When the plurality of switching elements is turned off, the antenna operates at a high cross-polarization. The plurality of switching elements may include a plurality of diodes. The plurality of diodes may be configured to provide a current path across the slot when the plurality of diodes is turned on.

### BRIEF DESCRIPTION OF THE DRAWINGS

FIG. 1 illustrates frequency bands for use for Dynamic Frequency Selection (DFS).
FIG. 2 is a block diagram of an access point with switchable depolarization antennas, according to embodiments of the present invention.
FIG. 3 illustrates example polarizations of a depolarized antenna, according to embodiments of the present invention.
FIG. 4A is a layout view of a switchable depolarization antenna configured for low cross-polarization, according to embodiments of the present invention.
FIG. 4B is a graph of surface currents of the depolarization antenna configured for low cross-polarization of FIG. 4A, according to embodiments of the present invention.
FIG. 4C is a layout view of a switchable depolarization antenna configured for high cross-polarization, according to embodiments of the present invention.
FIG. 4D is a graph of surface currents of the depolarization antenna configured for high cross-polarization of FIG. 4C, according to embodiments of the present invention.
FIG. 5A is a layout view of a switchable depolarization antenna configured for low cross-polarization, according to the embodiments of the present invention.
FIG. 5B is a graph of surface currents of the depolarization antenna configured for low cross-polarization of FIG. 5A, according to embodiments of the present invention.
FIG. 5C illustrates the surface current magnitude of the depolarization antenna configured for low cross-polarization of FIG. 5A, according to embodiments of the present invention.
FIG. 6A is a layout view of a switchable depolarization antenna of FIG. 5A when configured for high cross-polarization, according to the embodiments of the present invention.
FIG. 6B is a graph of surface currents of the switchable depolarization antenna configured for high cross-polarization of FIG. 6A, according to embodiments of the present invention.
FIG. 6C illustrates the surface current magnitude of the depolarization antenna configured for high cross-polarization of FIG. 6A, according to embodiments of the present invention.
FIG. 7A and FIG. 7B are layout views of switchable depolarization antennas, according to the embodiments of the present invention.
FIG. 8 illustrates radiation patterns of the switchable depolarization antenna of FIG. 5A in the two modes of operation, according to the embodiments of the present invention.

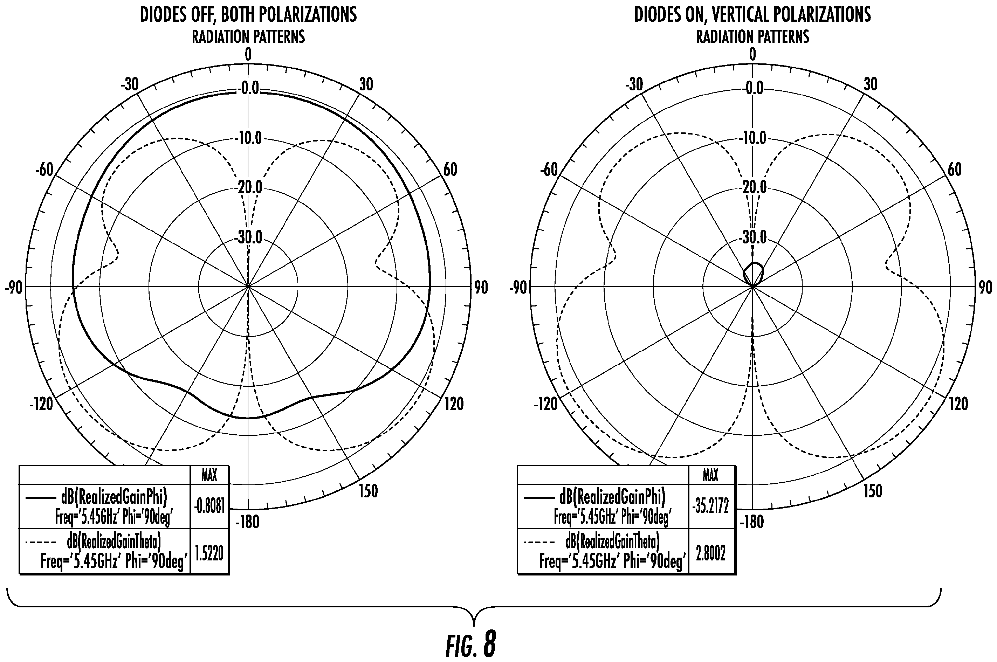

FIG. 8 illustrates a vertically polarized horn antenna receiver that is used at a distance from the vertical antenna to compare the performance of the antenna in the DFS setup, according to embodiments of the present invention.

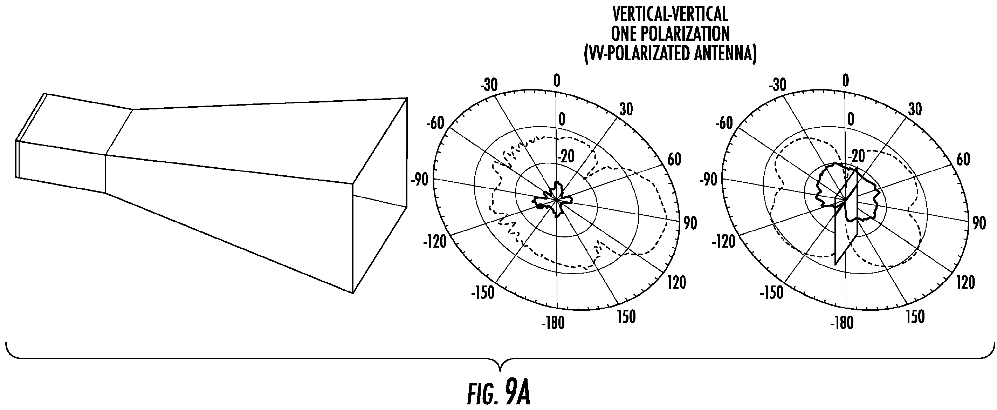

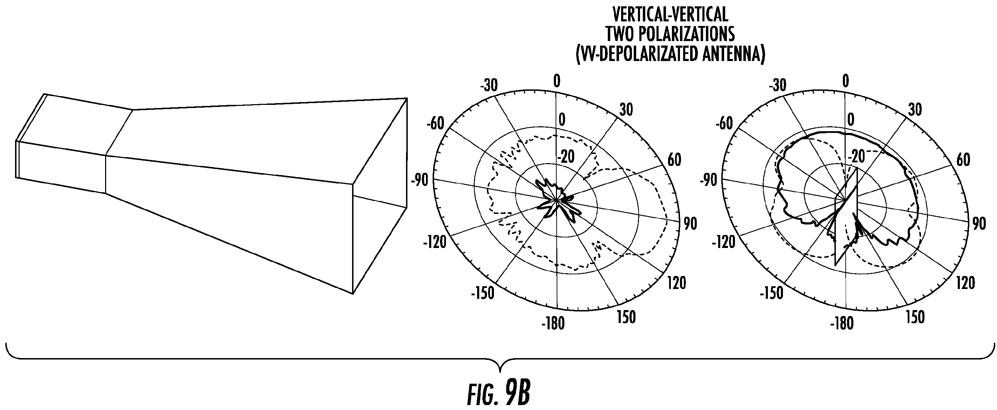

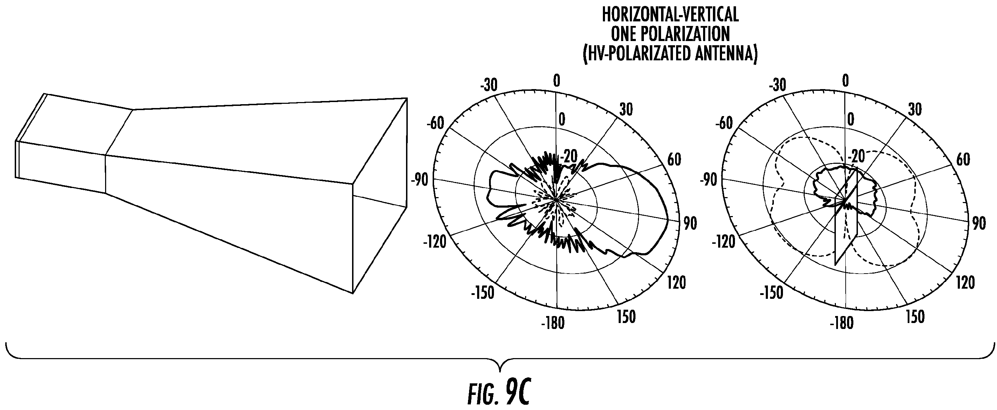

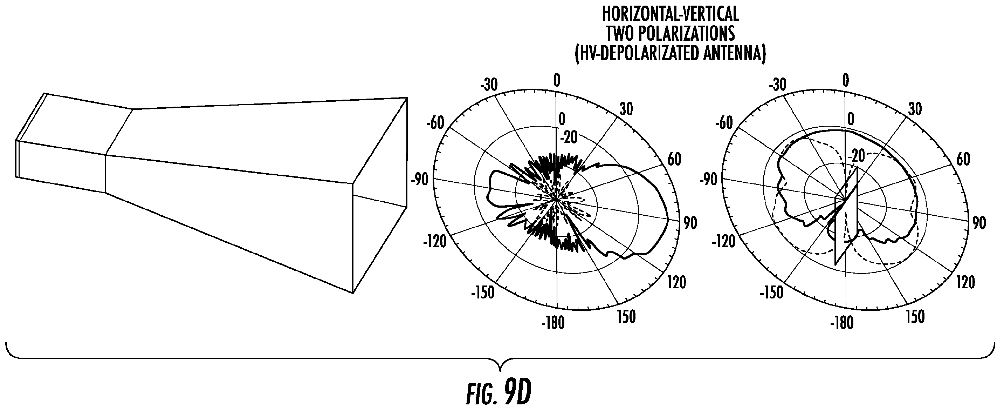

FIG. 9 illustrates a vertically polarized horn antenna receiver that is used at a distance from the depolarized antenna to compare performance of the antenna in the DFS setup, according to embodiments of the present invention.

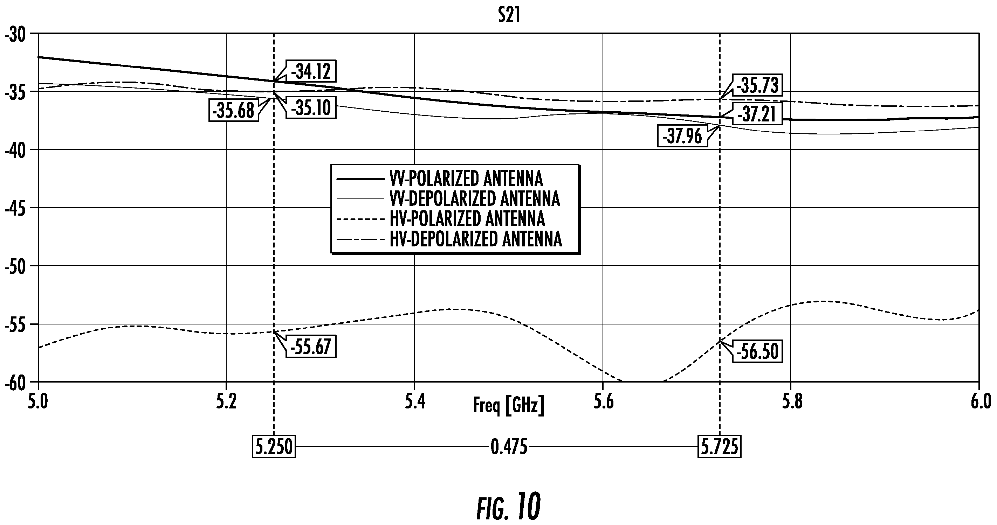

FIG. 10 is a graph of the ratio of the received signal to the sent signal for various antenna configurations of FIG. 8 and FIG. 9 at different frequencies, according to embodiments of the present invention.
FIGS. 11 to 16 are flowcharts of operations of a DFS antenna, according to embodiments of the present invention.
FIG. 17 is a block diagram of an access point configured to use Dynamic Frequency Selection (DFS) on a communication medium, according to embodiments of the present invention.

Like reference numerals refer to corresponding parts throughout the drawings. Moreover, multiple instances of the same part may be designated by a common prefix separated from an instance number by a dash.

### DETAILED DESCRIPTION

As discussed above, Wi-Fi networks include access points that support communications in both the 2.4 GHz and 5 GHz frequency bands and have a radio for each frequency band. The United States Federal Communications Commission allows spectrum in the 5.25-5.35 GHz and/or 5.47-5.725 GHz frequency bands for commercial use with a government mandate to not interfere with weather and civil aviation communications in these frequency ranges.

Communications, especially around airports, include weather and civil aviation radar and communication traffic in operational bands in the frequency ranges of 5.25-5.35 GHz and/or 5.47-5.725 GHz. The government requirements mandate not interfering with these weather and civil aviation communication frequencies but allow commercial communication when channels in these frequency bands are not being utilized. Access points (APs) are mandated to monitor and perform a Channel Availability Check (CAC) on a potential channel for 60 seconds when the access point moves to a channel in the 5.25-5.35 GHz or 5.47-5.725 GHz operational frequency bands.

Dynamic Frequency Selection (DFS) is a channel allocation scheme for Wi-Fi and other wireless LANs that ensures no radar or communication traffic is operating in a specific channel before transmitting advertising beacons and serving clients on this specific channel. DFS specifically prevents interference from modern communication systems with conventional communications such as military radar, weather radar, and satellite communications. For example, DFS is mandated by the FCC for the 5.25-5.35 GHz U-NII-2A band and the 5.47-5.725 GHz U-NII-2C band in the United States. DFS channels are used to increase the number of available Wi-Fi channels while ensuring that 5 GHz Wi-Fi radios do not interfere with radar. Some EU countries, have added Ch-149 ~ Ch-165, corresponding to frequencies 5.735 GHz ~ 5.835 GHz as DFS channels.

Initially, an access point may be set up for non-DFS scanning to select a non-DFS channel or to select a DFS channel with low interference for communication. If a non-DFS channel is selected, communication may commence immediately. However, non-DFS channels are typically very busy and overloaded with traffic so performance may be reduced. If an access point wishes to move to a DFS channel for better performance, conventional techniques may produce a potential service outage for 60 seconds during the CAC. During the 60 seconds of the CAC, a listening test occurs that monitors the channel without transmitting anything on the channel. This potential service outage may be a longer period of time than 60 seconds if the radar signals are already present on the channel. Once the listening period ends without detecting any interfering radar signals, the channel may be occupied by sending beacons or other communication traffic. These service outages of 60 seconds are not desirable in a variety of applications. If interference from weather and civil aviation signals is detected within the 60 seconds listening window, then another DFS channel may be selected and the CAC listening window restarts.

The Zero Wait Dynamic Frequency Selection feature helps to avoid service outages in the US/FCC and Europe/ETSI regulatory domains. Typically, when a radar signal is detected in the current DFS channel, the access point changes its channel immediately back to a non-DFS channel. When using Zero Wait DFS, the radios on access points monitor for radar signals on one or more other DFS channels while operating on the current channel assignment. DFS channels that are free of interfering radar signals for at least 60 seconds are identified. This allows client-serving radios to switch to a new non-interfering DFS channel and operate immediately, just as they would with a non-DFS channel, without losing any existing client connections.

Wi-Fi Protocols (IEEE 802.11 a/b/g/n/ac/ax/be) support the Listen Before Talk (LBT) protocol. The LBT protocol allows a device to sense energy over the channel before occupying the channel to avoid interference with other users and to effectively share spectrum. The DFS protocol allows a device to sense for specific radio/radar signals above a threshold energy level. In general, in North America access points are required to listen only for DFS signals and occupy a channel if there is no DFS signal present for 60 seconds (i.e., CAC). The access to the spectrum is handled by the specific Wi-Fi Protocol (such as IEEE 802.11 a/b/g/n/ac/ax/be), which is the LBT protocol. Once the channel is occupied, time division duplexing (TDD) is implemented such that the device may not hold the channel indefinitely. LBT is mainly implemented by using an energy threshold. Listening on the channel occurs and if the sensed energy is above the threshold, the channel is assumed to be occupied and listening then occurs on another channel. If the sensed energy is below the threshold, channel is assumed to be free.

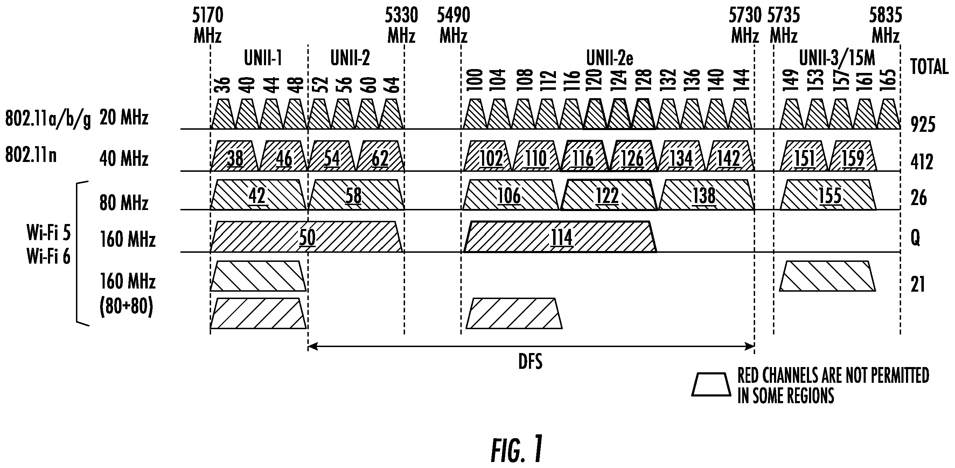

FIG. 1 illustrates DFS bands used for various wireless local network/Wi-Fi standards. Referring to FIG. 1, channels for the 802.11a/b/g, 802.11n, Wi-Fi 5, and Wi-Fi 6 wireless local network standards are shown for various frequency bands in the range 5.170 GHz to 5.835 GHz. There are 16 DFS channels 52, 56, 60, 64, 100, 104, 108, 112, 116, 120, 124, 128, 132, 136, 140, and 144 in the 5.25 GHz to 5.73 GHz frequency range. The nine channels 36, 40, 44, 48, 149, 153, 157, 161, and 165 are non-DFS channels. In some regions of the world, the 120, 124, 128 channels are not permitted for the 802.11a/b/g standard traffic, as marked in FIG. 1.

Many chip vendors (e.g., Qualcomm) that sell Wi-Fi chipsets that implement DFS may switch or split one of the data ports to use for scanning for zero-CAC for Zero Wait DFS, in order that an additional dedicated antenna is not needed for scanning. Most access points have equal numbers of vertical and horizontal polarization antennas. In these access points, it may not matter which antenna (vertical or horizontal polarization) is used for the scanning operation, but there is some probability that the polarization of the scanning antenna may not match the polarization of the radar antenna. In this case, the received radar signal could be reduced by 20 dB to 30 dB, such that the radar signal may not be detected. This will impact the zero-CAC performance and may fail to pass the government mandated regulations. The government regulations allow looking ahead for channels available in DFS bands when the device operates in a non-DFS or DFS channel. This look-ahead for Zero Wait DFS avoids the one-minute period of no transmission when switching to DFS channels. However, antennas that are both vertically and horizontally polarized may be needed at the access point, in order to scan both polarization planes simultaneously.

An access point may use one or more dedicated transmit/receive chains to perform the CAC. For example, a first transmit/receive chain may be coupled to a vertically polarized antenna and may perform a CAC check to identify vertically polarized radar signals in a DFS channel, while a second transmit/receive chain may be coupled to a horizontally polarized antenna and may perform a CAC check to identify horizontally polarized radar signals in the DFS channel. Such a system may be effective in identifying when radar signals are using the DFS channel of interest. As another example, an access point may include a single dedicated transmit/receive chain that is coupled to a depolarized polarized antenna and used to perform a CAC check. A depolarized antenna should be able to identify both horizontally polarized and vertically polarized radar signals in the DFS channel since the depolarized antenna will receive substantial signal energy at both polarizations. However, providing a dedicated antenna may increase the size and cost of the access point.

As noted above, to avoid this extra expense, access points which have multiple transmit/receive chains may use all of the transmit/receive chains for regular communications, but when the access point performs a CAC using Zero Wait DFS, one or more of the transmit/receive chains are used to perform the CAC. This reduces the communications capabilities of the access point during the look-ahead Zero Wait DFS, but avoids the need to have dedicated hardware for performing the look-ahead Zero Wait DFS.

As discussed above, modern access points typically include a plurality of transmit/receive chains, half of which are coupled to a horizontally polarized antenna and the other half of which are coupled to a vertically polarized antenna. Since a transmit/receive chain that is coupled to a horizontally polarized antenna may not be able to detect vertically polarized radar signals, and since a transmit/receive chain that is coupled to a vertically polarized antenna may not be able to detect horizontally polarized radar signals, it may be necessary to use two transmit/receive chains to perform the look-ahead Zero Wait DFS. This reduces the communications capabilities of the access point during the look-ahead Zero Wait DFS.

Embodiments of the present invention arise from the recognition that a depolarized antenna may be used to detect both horizontally polarized and vertically polarized radar signals in a DFS channel during the look-ahead Zero Wait DFS period. Thus, if a depolarized antenna is used, only a single transmit/receive chain needs to be used to search for radar signals during the look-ahead Zero Wait DFS period. Unfortunately, however, a depolarized antenna is generally not suitable for use during regular communications.

Pursuant to some embodiments of the present invention, switchable antennas are provided that can switch between a first polarization state and a second polarization state. The first polarization state may, for example, be a horizontal polarization or a vertical polarization and the second polarization state may be, for example, a depolarized state. When the transmit/receive chain attached to the switchable antenna is used for normal communications, it may be in the first polarization state, and when the transmit/receive chain attached to the switchable antenna is used to listen for radar signals.

As discussed herein, an antenna that is vertically polarized has the vertical polarization signals emphasized (i.e., have stronger power), with the orthogonal polarization signals (i.e., horizontally polarized signals) being very low power. A similar analogy may be made for an antenna that is horizontally polarized, for which horizontal polarization signals are emphasized (i.e., have stronger power), with the orthogonal polarization signals (i.e., vertically polarized signals) being very low power. An antenna that is depolarized has two polarizations at the same time. For example, a depolarized antenna in the depolarized state may have both vertical and horizontal polarized signals emphasized. This may require dedicating two ports to the CAC, reducing the communications capabilities of the access point during the CAC. The depolarized antenna described herein is a single antenna with high cross-polarization between the vertical and horizontal directions for the same antenna.

According to the inventive concepts, an antenna may have a switchable mode between low cross-polarization and high cross-polarization configurations. For example, antennas on some access points may be linearly polarized, i.e., either vertically polarized or horizontally polarized. Due to the low cross-polarization level between the vertically polarized and the horizontally polarized operation of the antenna, the received power for the orthogonal polarization will be low. In order to implement DFS, both polarizations need to be tested, which may require extra hardware or may include additional antennas. To avoid the need for extra antennas, a linear polarized antenna may be modified to switch between the low cross-polarization mode and the high cross-polarization mode. This mode switchable antenna will be referred to as a "depolarized antenna". In the high cross-polarization mode of the depolarized antenna, both polarizations may be sensed at the same time, such that the access point may listen to signals at both polarizations in the depolarized mode. The antenna assigned to the DFS operation may be configured to work in a single polarization or in the depolarization state.

The depolarization state is a state that both polarizations are significant, such that the received signal is a combination of both polarizations. The transmitter may be working at one polarization, but the receiver is picking up both polarizations. This method has an advantage over switching between circular polarization and linear polarization. If using circular polarization, the antenna should be able to also operate in a linear polarization for the Wi-Fi mode. This design may require additional parts such as power dividers, which is not desirable, due to size and cost considerations.

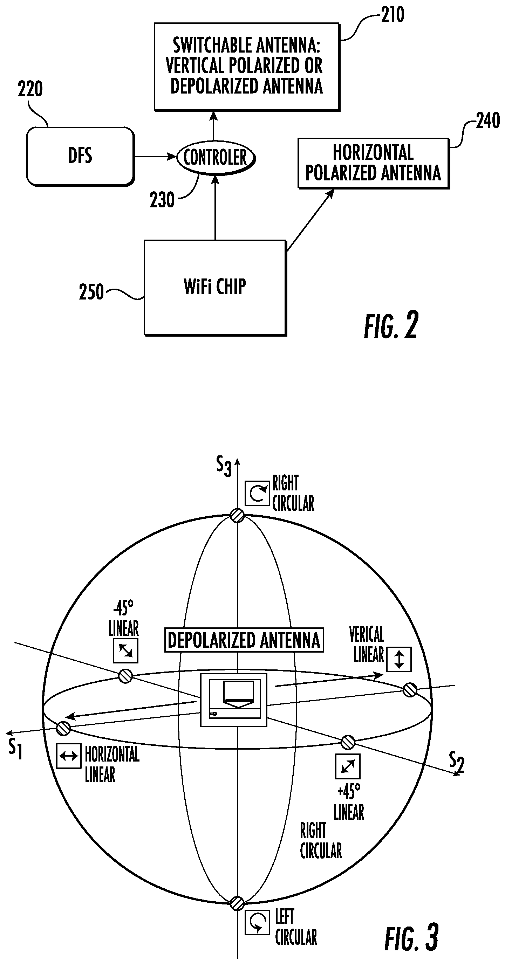

FIG. 2 illustrates a switchable antenna that is either singularly polarized (e.g., vertically polarized) or depolarized, according to various embodiments described herein. Referring to FIG. 2, the switchable antenna 210 is switchable between the polarized state or the depolarized state. The switchable antenna 210 is connected to a controller 230 that selects connecting the antenna to either a DFS circuit 220 or to a Wi-Fi circuit 250. When the switchable antenna 210 is connected to the DFS circuit 220, the switchable antenna 210 is configured to operate in a state that provides high cross-polarization (i.e., operate in a depolarized state). In the depolarized state, power is received from both the horizontal and vertical polarizations at the same time so that radar signals having either polarization may be detected. Both polarizations may be sensed at the same time, which requires an antenna that has a high cross-polarization (i.e., depolarized state). According to the present inventive concepts, the access point with the switchable antenna 210 has a single transceiver that can listen to both polarizations. This provides savings in the required antenna hardware and transceiver circuitry.

When the switchable antenna 210 is configured to operate as a Wi-Fi antenna, the antenna is configured to operate as a vertically polarized antenna with a low cross-polarization level. The Wi-Fi circuit 250 is also connected to an additional antenna 240 that operates at a polarization that is orthogonal to the operation of the switchable antenna (e.g., horizontal polarization). Although a vertically polarized antenna is used as a non-limiting example of the switchable antenna 210, the antenna configured for low cross-polarization may be horizontally polarized or other polarization without departing from the inventive concepts discussed herein. Low cross-polarization is desired for Wi-Fi communications, such that interference from the horizontal polarization is minimal to the vertically polarized antenna.

FIG. 3 illustrates example polarizations of a depolarized antenna, according to embodiments of the present invention. Referring to FIG. 3, depolarized antenna 300 may operate with high cross-polarization in two different polarizations. In some embodiments, the two operational polarizations of the depolarized antenna 300 may be orthogonal to one another, such as, for example, vertical polarization and horizontal polarization. Depolarized antenna 300 may operate at both vertical and horizontal polarization.

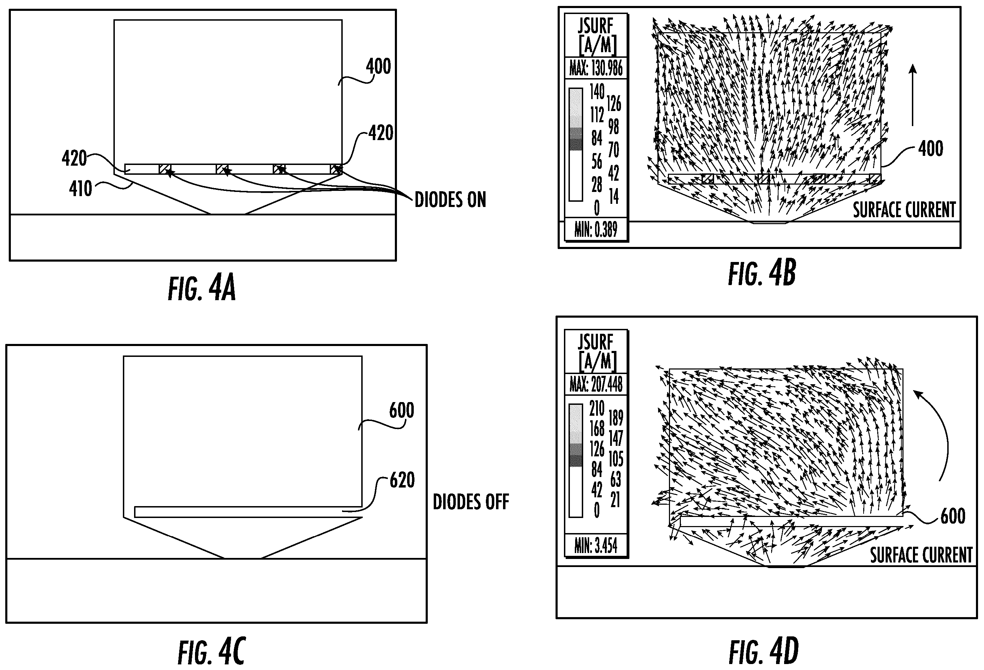

FIG. 4A is a layout view of a switchable depolarization antenna configured for low cross-polarization, according to the embodiments of the present invention. Referring to FIG. 4A, the antenna element 400 of the switchable antenna 210 of FIG. 2 may include a slot 420. Switchable antenna element 400 may be a vertically polarized antenna that has the current distribution shown in FIG. 4B, as a non-limiting example. Switching elements 410, such as diodes, RF switches, or MEMS switches, may be connected across slot 420. Turning on the switching elements 410 (e.g., diodes) allows a current path for surface current to flow across the slot 420, providing low cross-polarization for the vertically polarized antenna. In the non-limiting example of a diode being the switching elements 410, the cathode of the diode may be connected to an upper portion of the slot 420 and the anode of the diode may be connected to a lower portion of the slot, such that the current may flow from the lower portion of the antenna element 400 to the upper portion of the antenna element 400. These diodes may be inserted across the antenna metal area. The RF currents on the antenna element 400 may be alternating current (AC) so the direction may switch over time. FIG. 4A illustrates a snapshot in time. A control signal may pass to the diodes to control the diodes being switched on and off. However, the control signal may cause some surface disturbance so a careful layout of the control signal lines for the diode may be needed. Furthermore, the matching bandwidth of the antenna may be decreased with respect to conventional designs due to the presence of the slot 420 and switching elements 410. Optimization of the design for proper matching including matching to the antenna that includes the slot 420, switching elements 410, and control signal routing is needed.

FIG. 4B is a graph of surface currents of the switchable depolarization antenna configured for low cross-polarization of FIG. 4A, according to the embodiments of the present invention. Referring to FIG. 4B, when the diodes 410 are turned on, the surface current may flow in one direction with respect to the ground plane. This surface current flow provides a vertical polarization with a low cross-polarization. The current that flows from the ground to the top end of the monopole creates a monopole like current. The monopole has a polarization that is the theta direction, if the Z axis is along it. In a planar monopole example, the ground may not be orthogonal to the plane of antenna. In other words, the current may be directed in one direction, creating a monopole like pattern with a pure polarization (e.g., low-cross polarization).

FIG. 4C is a layout view of a switchable depolarization antenna of FIG. 4A when configured for high cross-polarization, according to the embodiments of the present invention. Referring to FIG. 4C, antenna element 600 of the switchable antenna 210 of FIG. 2 and/or antenna element 400 of FIG. 4 may include a slot 620. Switching elements 610, such as diodes, that are connected across slot 620 may be turned off to block the current path for surface current across the slot 620, providing high cross-polarization for the antenna 600, (i.e., depolarization).

FIG. 4D is a graph of surface currents of the switchable depolarization antenna configured for high cross-polarization of FIG. 4C, according to embodiments of the present invention. Referring to FIG. 4D, when the diodes 410 of FIG. 4A are turned off such that a gap at the slot 620 logically occurs, the current path may be disturbed. The surface current may flow around the slot 620, creating a longer path with a curvature in the current path. This curvature in the current path will create a high cross-polarization level for the antenna 600 of FIG. 4C.

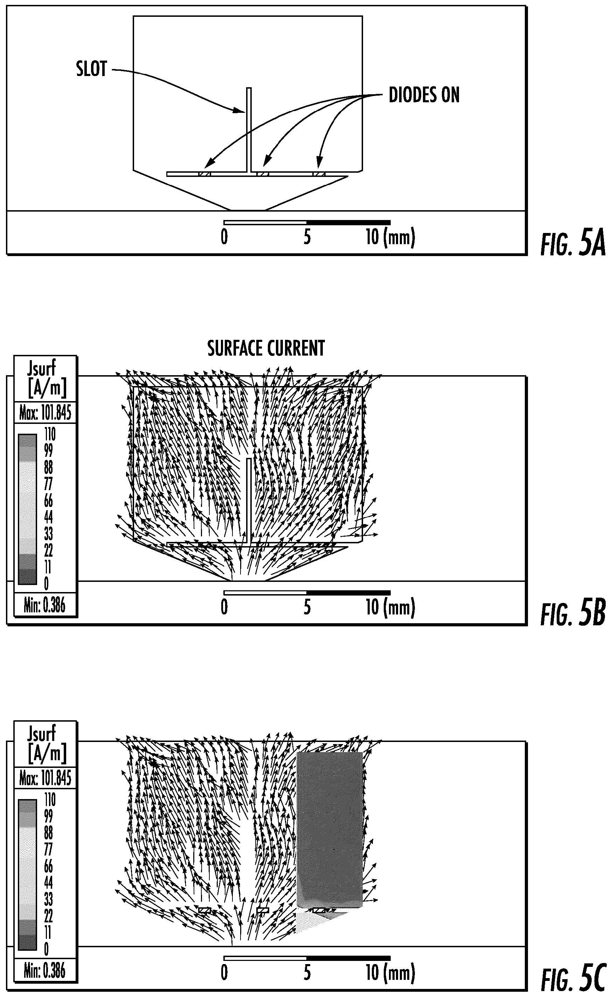

FIG. 5A is a layout view of a switchable depolarization antenna configured for low cross-polarization, according to the embodiments of the present invention. For brevity, discussion similar to FIG. 4A will not be repeated. Referring to FIG. 5A, the antenna element of the switchable antenna 210 of FIG. 2 may include a slot that has a horizontal portion and a vertical portion that is approximately perpendicular to the horizontal portion. This switchable antenna element may be a vertically polarized antenna that has the current distribution shown in FIG. 5B, as a non-limiting example. Switching elements, such as diodes, RF switches, or MEMS switches, may be connected across the horizontal portion of the slot and/or across the vertical portion of the slot. Turning on the switching elements (e.g., diodes) allows a current path for surface current to flow across the slot, providing low cross-polarization for the vertically polarized antenna. In the non-limiting example of a diode being the switching elements, the cathode of the diode may be connected to an upper portion of the slot and the anode of the diode may be connected to a lower portion of the slot, such that the current may flow from the lower portion of the antenna element to the upper portion of the antenna element. FIG. 5C illustrates the surface current magnitude of the depolarization antenna configured for low cross-polarization of FIG. 5A, according to embodiments of the present invention.

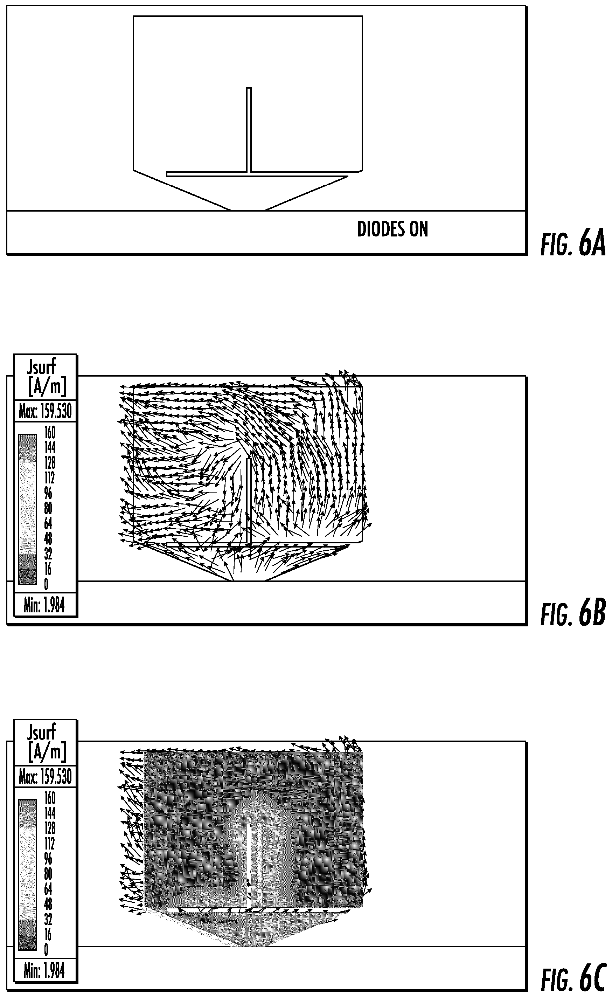

FIG. 6A is a layout view of a switchable depolarization antenna of FIG. 5A when configured for high cross-polarization, according to the embodiments of the present invention. Referring to FIG. 6A, antenna element of the switchable antenna of FIG. 2 may include a slot 620. Switching elements, such as diodes, that are connected across the slot may be turned off to block the current path for surface current across the slot, providing high cross-polarization for the antenna, (i.e., depolarization).

FIG. 6B is a graph of surface currents of the switchable depolarization antenna configured for high cross-polarization of FIG. 6A, according to embodiments of the present invention. Referring to FIG. 6B, when the diodes of FIG. 6A are turned off such that a gap at the slot logically occurs, the current path may be disturbed. The surface current may flow around the slot, creating a longer path with a curvature in the current path. This curvature in the current path will create a high cross-polarization level for the antenna of FIG. 6A. FIG. 6C illustrates the surface current magnitude of the depolarization antenna configured for high cross-polarization of FIG. 6A, according to embodiments of the present invention.

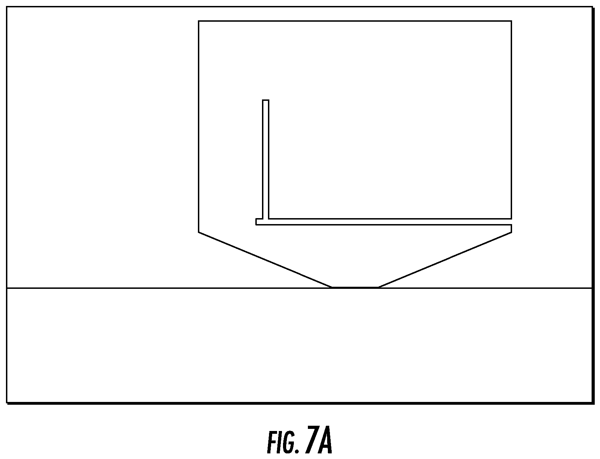

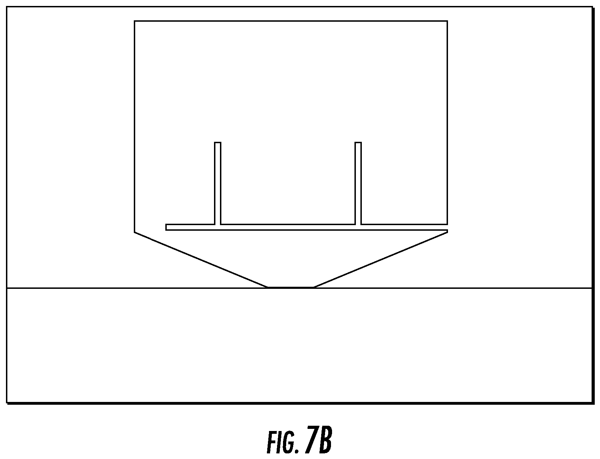

FIG. 7A and FIG. 7B are layout views of switchable depolarization antennas, according to the embodiments of the present invention. The antenna of FIG. 7A includes slot with a horizontal portion and a vertical portion that intersects the horizontal portion and is offset from a center of the horizontal portion. The antenna of FIG. 7B includes slot with a horizontal portion and two vertical portions that intersect the horizontal portion.

FIG. 8 illustrates radiation patterns of the switchable depolarization antenna of FIG. 5A in the two modes of operation, according to the embodiments of the present invention. The radiation pattern with the diodes in the off state of the switchable depolarization antenna produces a reasonably strong radiation pattern at both polarizations. The radiation pattern with the diodes in the on state of the switchable depolarization antenna produces a strong radiation pattern at the vertical polarization, but has weak radiation pattern at the horizontal polarization.

FIG. 9A illustrates a linearly polarized horn antenna transmitter that is positioned at a suitable distance from the vertical/vertical polarized antenna (i.e., one polarization) to compare the performance of the vertical/vertical polarized antenna in the DFS setup, according to the embodiments of the present invention. To measure the performance of the switchable antennas of FIG. 2, FIG. 3, and/or FIG. 5A, a horn antenna is placed at a suitable distance from the switchable antenna. The horn antenna is oriented to transmit linearly polarized RF radiation when the switchable antenna is receiving at a matching (vertical) polarization. A ratio of the power of the received signal to the sent signal, S21, is measured. In the vertical-vertical polarization configuration, the received power is high.

FIG. 9B illustrates a vertically polarized horn antenna transmitter that is used at a distance from the switchable depolarized antenna in the a vertical-vertical depolarized state to compare the performance of the antenna in the DFS setup, according to the embodiments of the present invention. Referring to FIG. 9B, horn antenna is placed at a suitable distance from the depolarized antenna. The horn antenna is oriented to transmit vertically polarized RF radiation when the switchable antennas of FIG. 2, FIG. 3, and/or FIG. 5A are operating in the depolarized state. A ratio of the power of the received signal to the sent signal, S21, is measured. In the vertical-vertical depolarization configuration, the depolarized switchable antenna has a relatively high gain for vertically polarized RF radiation, resulting in a high level of received power in the vertical polarization as well as in the horizontal polarization.

FIG. 9C illustrates a linearly polarized horn antenna transmitter that is positioned at a suitable distance from the horizontal/vertical polarized antenna (i.e., one polarization) to compare the performance of the horizontal/vertical polarized antenna in the DFS setup, according to the embodiments of the present invention. Referring to FIG. 9C, the horn antenna is rotated (i.e., rotated 90° from the example horn antenna of FIG. 9A), the polarization of the horn with respect to the depolarized/polarized vertical antenna is now horizontal. In this case, the received power at the receiving antenna is proportional to the cross-polarization level. Therefore, the received power for the case of a vertical antenna is low. The horizontal-vertical polarized antenna (i.e., single polarization) will not receive much power in the horizontal polarization due to the low gain of the cross-polarization pattern.

FIG. 9D illustrates a linearly polarized horn antenna transmitter that is positioned at a suitable distance from the horizontal/vertical depolarized antenna (i.e., two polarizations) to compare the performance of the horizontal/vertical depolarized antenna in the DFS setup, according to the embodiments of the present invention. Referring to FIG. 9D, the horn antenna is rotated (i.e., rotated 90° from the example horn antenna of FIG. 9B) such that the antenna is set up to measure the received power level for the horizontal/vertical depolarized antenna configuration. The depolarized antenna in this setup receives a comparable level of power in both the horizontal and vertical directions due to the high gain of the cross-polarization pattern.

FIG. 10 is a graph of the ratio of the received signal to the transmitted signal S21 for the various antenna configurations of FIGS. 9A, 9B, 9C, and FIG. 9D at different frequencies, according to embodiments of the present invention. For the depolarized antenna configurations, there is not much difference in the ratio of the power of the received signal to the transmitted signal, S21, between the vertical-vertical configuration of the depolarized antenna case VV_DP and the horizontal-vertical configuration of the depolarized antenna case HV_DP across the frequency range that is shown. However, for the vertically polarized antenna configuration, there is a more significant difference in the S21 between the vertical-vertical power ratio of the vertically polarized antenna case VV_VP and the horizontal-vertical power ratio of the vertically polarized antenna case HV_VP across the frequency range that is shown.

FIGS. 11 to 16 are flowcharts of operations of a DFS antenna, according to embodiments of the present invention. Referring to FIG. 11, a method of operating an access point using Dynamic Frequency Selection (DFS) on a communication medium may include selecting an operating mode of an antenna that is configured to operate in both a single polarization mode and in a depolarization mode, at block 1110. When the antenna is operating in the depolarization mode, the access point may listen for transmissions from other entities on a plurality of DFS communication channels, at block 1120. The access point may select a DFS communication channel of the plurality of DFS communication channels that is free of the transmissions from other entities, responsive to the listening, at block 1130. According to government regulations, the Channel Availability Check procedure which includes the listening on the potential DFS channel, must occur for at least 60 seconds to ensure that the weather and civil aviation radar and communication traffic in operational bands in the frequency ranges of 5.25-5.35 GHz and/or 5.47-5.725 GHz will not be interfered with by using the potential DFS channel. The access point may then transmit on the communication medium using the DFS communication channel that was selected, at block 1140.

Referring to FIG. 12, the listening for transmissions from other entities, at block 1120, may include listening for transmissions at the first polarization of the antenna in the depolarization mode and at a second polarization of the antenna in the depolarization mode, at block 1210. The listening may occur simultaneously at both polarizations. Since in the depolarized state, the switchable depolarized antenna will receive significant energy at both polarizations, the first polarization is one of vertical, or horizontal polarization. The second polarization is different from the first polarization. For example, the switchable antenna in the depolarized mode may receive RF energy at vertical and horizontal polarizations. The access point for DFS operation includes a single transceiver and a single antenna configured to operate in the two polarizations.

Referring to FIG. 13, configuring the antenna to operate in the depolarization mode, at block 1310, includes switching the antenna of the access point to the depolarization mode, at block 1320. The antenna is switchable between a low cross-polarization in the single polarization mode and a high cross-polarization in the depolarization mode.

Referring to FIG. 14, the method of operating the access point using DFS may include switching, by a controller, a connection of the antenna to a DFS circuit or a Wi-Fi circuit, at block 1410. When the controller switches the connection of the antenna to the Wi-Fi circuit, the antenna operates at a single polarization mode with a low cross-polarization.

Referring to FIG. 15, the method of operating the access point using non-DFS mode may include configuring the antenna to operate in the single polarization mode, at block 1510. The method may include turning on the plurality of switching elements such that the antenna has a low cross-polarization, at 1520. These switching elements may be, for example, diodes that extend across the slot of the switchable antenna, such that the anode and cathode of the diode are connected to opposite edges across the slot.

Referring to FIG. 16, the method of operating the access point may include configuring the antenna to operate in the depolarization mode, at block 1610. The plurality of switching elements may be turned off (or on), such that the antenna has a high cross-polarization, at block 1620. The switching elements may include diodes, RF switches, or MEMS.

FIG. 17 is a block diagram of an access point configured to use DFS on a communication medium, according to embodiments of the present invention. Referring to FIG. 17, an access point 1700 may include a switchable antenna 1720 configured to operate in both a single polarization mode and in a depolarization mode, and a controller 1710 configured to select an operating mode of the switchable antenna 1720. The operating mode may be a single polarization mode or a depolarization mode. The access point 1700 may include a transceiver 1740 configured to listen, when the antenna is operating in the depolarization mode, for transmissions from other entities on the communication medium on a plurality of DFS communication channels.

Still referring to FIG. 17, The access point 1700 may include a DFS circuit 1730 that is configured to select a DFS communication channel of the plurality of DFS communication channels that is free of transmissions from other entities. The transceiver 1740 is configured to transmit using the DFS communication channel that was selected by the DFS circuit 1730. The transceiver 1740 is configured to listen for transmissions at a first polarization of the antenna in the depolarization mode and at a second polarization of the antenna in the depolarization mode. The first polarization is one of a vertical polarization, a horizontal polarization, a slanted polarization, and the second polarization is different from the first polarization. For example, the access point 1700 may be operating with the first polarization as the vertical polarization and the second polarization as the horizontal polarization, which is orthogonal to the vertical polarization. The access point 1700 includes a single transceiver 1740 and a single switchable antenna 1720 that is configured to operate in low cross-polarization or high cross-polarization modes.

Still referring to FIG. 17, the controller 1710 is configured to switch the switchable antenna 1720 to the depolarization mode. The switchable antenna 1720 operates in either a low cross-polarization in the single polarization mode and a high cross-polarization in the depolarization mode. The controller 1710 is configured to switch a connection of the antenna to a DFS circuit 1730 or to a Wi-Fi circuit 1750. When the controller 1710 switches the connection of the switchable antenna 1720 to the Wi-Fi circuit 1750, the switchable antenna 1720 operates at a first polarization, such as vertical polarization, in the single polarization mode. The Wi-Fi circuit 1750 may be connected to an additional antenna 1760 that is configured to operate at a second polarization that is orthogonal to the first polarization. The additional antenna 1760 may be external to the access point 1700 or may be internal to the access point 1700, according to some embodiments. If the additional antenna 1760 is internal to the access point 1700, the switchable antenna 1720 operates with the DFS circuit 1730, but the DFS circuit 1730 does not use the additional antenna 1760, and the DFS circuit 1730 may be isolated from the additional antenna 1760. The additional antenna 1760 is for use by the Wi-Fi circuit 1750.

The switchable antenna 1720 may include a slot with a plurality of switching elements that are adjacent to the slot. When the plurality of switching elements are turned on (or off), the antenna operates at a low cross-polarization. When the plurality of switching elements are turned off (or on), the antenna operates at a high cross-polarization. The plurality of switching elements may be diodes, RF switches, or MEMS.

Although controller 1710 is shown as being part of the access point 1700, controller 1710 be physically external to the access point 1700 and/or logically associated with the access point 1700. The access point 1700 may communicate with the controller 1710 via a network, which may comprise, for example, the Internet, an intra-net and/or one or more dedicated communication links. It will also be appreciated that some access points 1700 may only be connected to the network through other access points 1700 (e.g., in a mesh network implementation). Note that the controller 1710 may be at the same location as the other components in Wi-Fi network or may be located remotely (e.g., cloud based controllers). The access point 1700 may be managed and/or configured by the controller 1710. The access point 1700 may communicate with the controller 1710 using wireless communications and/or using a wired communication protocol, such as a wired communication protocol that is compatible with an IEEE 802.3 standard (which is sometimes referred to as "Ethernet").

As described herein, the switchable antenna design that includes a depolarized mode may improve the DFS functionality without much additional cost and the requirement for additional board space. The depolarized mode allows the antenna to have higher cross-polarization so that the same antenna may operate a high level of vertical and horizontal polarizations at the same time, for CAC on potential channels. This depolarized antenna is particularly useful for the DFS channel allocation scheme for Wi-Fi and other wireless LANs that ensures no radar or communication traffic is operating in a specific channel before transmitting advertising beacons and serving clients on this specific channel.

Embodiments of the present invention have been described above with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*i.e.,* "between" versus "directly between", "adjacent" versus "directly adjacent", etc.).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, operations, elements, and/or components, but do not preclude the presence or addition of one or more other features, operations, elements, components, and/or groups thereof.

Aspects and elements of all of the embodiments disclosed above can be combined in any way and/or combination with aspects or elements of other embodiments to provide a plurality of additional embodiments.

Further aspects of the invention are provided by the subject matter of the following clauses:
1. A method of operating an access point using Dynamic Frequency Selection (DFS), the method comprising:
   selecting an operating mode of an antenna that is configured to operate in both a single polarization mode and in a depolarization mode;
   listening, when the antenna is operating in the depolarization mode, for transmissions from other entities on a DFS communication channel; and
   transmitting on the DFS communication channel if it is determined that the DFS communication channel is free of high priority users.
2. The method of any one of the preceding clauses, wherein the listening for transmissions occurs on a plurality of DFS communication channels comprising the DFS communication channel, the method further comprising:
   selecting the DFS communication channel of the plurality of DFS communication channels that is free of the transmissions from other entities, responsive to the listening.
3. The method of any one of the preceding clauses, wherein the listening for transmissions from the other entities comprises:
   listening for the transmissions at a first polarization of the antenna in the depolarization mode and at a second polarization of the antenna in the depolarization mode.
4. The method of any one of the preceding clauses, wherein the first polarization is one of a vertical polarization, a horizontal polarization, a slanted polarization, or a depolarization, and
   wherein the second polarization is different from the first polarization.
5. The method of any one of the preceding clauses, wherein the first polarization comprises the vertical polarization and the second polarization comprises the horizontal polarization that is orthogonal to the vertical polarization.
6. The method of any one of the preceding clauses, wherein the access point comprises a single transceiver and the antenna comprises a single antenna configured to operate in two polarizations.
7. The method of any one of the preceding clauses, wherein the configuring the antenna to operate in the depolarization mode comprises:
   switching the antenna of the access point to the depolarization mode,
   wherein the antenna is switchable between a low cross-polarization in the single polarization mode and a high cross-polarization in the depolarization mode.
8. The method of any one of the preceding clauses, further comprising:
   switching, by a controller, a connection of the antenna to a DFS circuit or to a Wi-Fi circuit.
9. The method of any one of the preceding clauses, wherein when the controller switches the connection of the antenna to the Wi-Fi circuit, the antenna operates at a first polarization in the single polarization mode.
10. The method of any one of the preceding clauses, wherein the Wi-Fi circuit is connected to an additional antenna that is configured to operate at a second polarization that is orthogonal to the first polarization.
11. The method of any one of the preceding clauses, wherein the antenna comprises a slot with a plurality of switching elements adjacent to the slot.
12. The method of any one of the preceding clauses, wherein the configuring the antenna to operate in the single polarization mode comprises:
   turning on the plurality of switching elements such that the antenna has a low cross-polarization.
13. The method of any one of the preceding clauses, wherein the configuring the antenna to operate in the depolarization mode comprises:
   turning off the plurality of switching elements such that the antenna has a high cross-polarization.
14. The method of any one of the preceding clauses, wherein the plurality of switching elements comprises a plurality of diodes.
15. The method of any one of the preceding clauses, wherein the plurality of diodes are configured to provide a current path across the slot when the plurality of diodes are turned on.
16. An access point configured to use Dynamic Frequency Selection (DFS), the access point comprising:
   an antenna configured to operate in both a single polarization mode and in a depolarization mode;
   a controller configured to select an operating mode of the antenna, wherein the operating mode comprises the single polarization mode or the depolarization mode; and
   a transceiver configured to listen, when the antenna is operating in the depolarization mode, for transmissions from other entities on a DFS communication channel,
   wherein the transceiver is configured to transmit using the DFS communication channel if it is determined that the DFS communication channel is free of high priority users.
17. The access point of clause 16, wherein the transceiver is configured to listen for transmissions on a plurality of DFS communication channels comprising the DFS communication channel, the access point further comprising:
   a DFS circuit that is configured to select the DFS communication channel of the plurality of DFS communication channels that is free of the transmissions from other entities,
   wherein the transceiver is configured to transmit using the DFS communication channel that was selected.
18. The access point of any one of clauses 16-17, wherein the transceiver is configured to listen for transmissions at a first polarization of the antenna in the depolarization mode and at a second polarization of the antenna in the depolarization mode.
19. The access point of any one of clauses 16-18, wherein the first polarization is one of a vertical polarization, a horizontal polarization, a slanted polarization, or a depolarization, and
   wherein the second polarization is different from the first polarization.
20. The access point of any one of clauses 16-19, wherein the first polarization comprises the vertical polarization and the second polarization comprises the horizontal polarization that is orthogonal to the vertical polarization.
21. The access point of any one of clauses 16-20, wherein the access point includes a single transceiver comprising the transceiver and includes a single antenna comprising the antenna that is configured to operate in two polarizations.
22. The access point of any one of clauses 16-21, wherein the controller is configured to switch the antenna to the depolarization mode, and
   wherein the antenna is switchable between a low cross-polarization in the single polarization mode and a high cross-polarization in the depolarization mode.
23. The access point of any one of clauses 16-22, wherein the controller is configured to switch a connection of the antenna to a DFS circuit or to a Wi-Fi circuit.
24. The access point of any one of clauses 16-23, wherein when the controller switches the connection of the antenna to the Wi-Fi circuit, the antenna operates at a first polarization in the single polarization mode.
25. The access point of any one of clauses 16-24, wherein the Wi-Fi circuit is connected to an additional antenna that is configured to operate at a second polarization that is orthogonal to the first polarization.
26. The access point of any one of clauses 16-25, wherein the antenna comprises a slot with a plurality of switching elements adjacent to the slot.
27. The access point of any one of clauses 16-26, wherein when the plurality of switching elements is turned on, the antenna operates at a low cross-polarization.
28. The access point of any one of clauses 16-27, wherein when the plurality of switching elements is turned off, the antenna operates at a high cross-polarization.
29. The access point of any one of clauses 16-28, wherein the plurality of switching elements comprises a plurality of diodes.
30. The access point of any one of clauses 16-29, wherein the plurality of diodes are configured to provide a current path across the slot when the plurality of diodes are turned on.

## Claims

1. A method of operating an access point using Dynamic Frequency Selection (DFS), the method comprising:
selecting an operating mode of an antenna that is configured to operate in both a single polarization mode and in a depolarization mode;
listening, when the antenna is operating in the depolarization mode, for transmissions from other entities on a DFS communication channel; and
transmitting on the DFS communication channel if it is determined that the DFS communication channel is free of high priority users.

2. The method of Claim 1, wherein the listening for transmissions occurs on a plurality of DFS communication channels comprising the DFS communication channel, the method further comprising:
selecting the DFS communication channel of the plurality of DFS communication channels that is free of the transmissions from other entities, responsive to the listening.

3. The method of any one of the preceding claims, wherein the listening for transmissions from the other entities comprises:
listening for the transmissions at a first polarization of the antenna in the depolarization mode and at a second polarization of the antenna in the depolarization mode.

4. The method of Claim 3, wherein the first polarization is one of a vertical polarization, a horizontal polarization, a slanted polarization, or a depolarization, and
wherein the second polarization is different from the first polarization.

5. The method Claim 4, wherein the first polarization comprises the vertical polarization and the second polarization comprises the horizontal polarization that is orthogonal to the vertical polarization.

6. The method of any one of the preceding claims, wherein the access point comprises a single transceiver and the antenna comprises a single antenna configured to operate in two polarizations.

7. The method of any one of the preceding claims, wherein the configuring the antenna to operate in the depolarization mode comprises:
switching the antenna of the access point to the depolarization mode,
wherein the antenna is switchable between a low cross-polarization in the single polarization mode and a high cross-polarization in the depolarization mode.

8. The method of any one of the preceding claims, further comprising:
switching, by a controller, a connection of the antenna to a DFS circuit or to a Wi-Fi circuit.

9. The method of Claim 8, wherein when the controller switches the connection of the antenna to the Wi-Fi circuit, the antenna operates at a first polarization in the single polarization mode.

10. The method of Claim 9, wherein the Wi-Fi circuit is connected to an additional antenna that is configured to operate at a second polarization that is orthogonal to the first polarization.

11. The method of any one of the preceding claims, wherein the antenna comprises a slot with a plurality of switching elements adjacent to the slot.

12. The method of Claim 11, wherein the configuring the antenna to operate in the single polarization mode comprises:
turning on the plurality of switching elements such that the antenna has a low cross-polarization.

13. The method of any one of claims 11-12, wherein the configuring the antenna to operate in the depolarization mode comprises:
turning off the plurality of switching elements such that the antenna has a high cross-polarization.

14. The method of any one of claims 11-13, wherein the plurality of switching elements comprises a plurality of diodes.

15. The method of Claim 14, wherein the plurality of diodes are configured to provide a current path across the slot when the plurality of diodes are turned on.
